## Europäisches Patentamt
## European Patent Office
## Office européen des brevets

(11) Veröffentlichungsnummer: **0 116 874**
**B1**

## EUROPÄISCHE PATENTSCHRIFT

(45) Veröffentlichungstag der Patentschrift:
31.05.89

(51) Int. Cl.⁴: **H 01 S 3/097**

(21) Anmeldenummer: **84100829.5**

(22) Anmeldetag: **26.01.84**

(54) **Verfahren und Schaltungsanordnung zum Zünden von Gaslasern und Gaslaserverstärkern.**

(30) Priorität: **26.01.83 DD 247463**

(43) Veröffentlichungstag der Anmeldung:
**29.08.84 Patentblatt 84/35**

(45) Bekanntmachung des Hinweises auf die Patenterteilung:
**31.05.89 Patentblatt 89/22**

(84) Benannte Vertragsstaaten:
**CH DE GB LI NL**

(56) Entgegenhaltungen:
N.E.C. RESEARCH AND DEVELOPMENT, Nr. 60, Januar 1981, Seiten 33-40, Tokyo, JP; T. OIKADO et al.: "A new compact pulsed CO2 laser for materials processing"
ELEKTRIE, Band 29, Nr. 9, September 1975, Seiten 501-503, VEB Verlag Technik, Berlin, DE; H. NÖNNIG: "Thyristornetzteil 8kW für Lonen-Laser"

(73) Patentinhaber: **VEB Kombinat Feinmechanische Werke Halle, Rudolf- Breitscheid- Strasse 71, DDR- 4020 Halle (DD)**

(72) Erfinder: **Pöhler, Manfred, Dr., Block 213/8, DDR- 4090 Halle- Neustadt (DD)**
Erfinder: **Wittig, Richard, Dipl.- Phys., Röderberg 2, Halle (DD)**

(74) Vertreter: **Spott, Gottfried, Dr., Patentanwälte Spott und Puschmann Sendlinger- Tor- Platz 11, D-8000 München 2 (DE)**

EP 0 116 874 B1

## Beschreibung

Die Erfindung betrifft ein Verfahren und eine zugehörige Schaltungsanordnung zum Zünden von Gaslasern und Gaslaserverstärkern mit mehreren gekoppelten Gasentladungsstrecken, insbesondere von $CO_2$-Lasern, die mit axialer Gleichstromentladung betrieben werden, vorzugsweise mit Resonatorenanordnungen mit mehrfacher Faltung und jeweils zwei gegenüberliegenden Entladungsstrecken, deren Kathoden auf Erdpotential liegen und deren Anoden einen geringen Abstand zueinander aufweisen.

Zum sicheren Zünden der Entladungsstrecken von Gaslasern, die mit Gasgemischen betrieben werden, muß an den einzelnen Röhren jeder Entladungsstrecke eine Zündspannung anliegen, die allgemein etwa zwei- bis dreimal größer ist als die für die Aufrechterhaltung der Gasentladung erforderliche Brennspannung. Dabei ist die Zündspannung und auch der Brennspannungsbereich von der Geometrie der Entladungsstrecken, vom Gasgemisch und vom Gasdruck abhängig, wobei Gasgemische mit günstigen Lasereigenschaften meist relativ schwierig zu zünden sind. Um derartige Zündschwierigkeiten zu umgehen, wird allgemein mit einem Zündspannungsimpuls relativ hoher Spannung gearbeitet. Dazu ist beispielsweise bekannt, zur Erzeugung dieses Zündspannungsimpulses ein Hilfsnetzteil geringer Leistung zum eigentlichen Netzteil in Reihe zu schalten. Im Einschaltmoment wird die Spannung des Hilfsnetzteils aufgestockt, bei Zündung des Lasers und der sich daraus ergebenden Belastung bricht die Spannung des Hilfsnetzteils zusammen und das eigentliche Netzteil übernimmt über eine entsprechende Diodenschaltung die Stromversorgung. Die Einstellung des Entladungsstroms erfolgt dabei hochspannungsseitig über Trioden. Diese Variante ist neben anderen Nachteilen technisch aufwendig.

Bei mittels Thyristoren gesteuerten Hochspannungsnetzgeräten kann die hohe Zündspannung durch kurzzeitige Verkleinerung des Zündwinkels der Thyristoren erzeugt werden. Beiden Varianten steht als besonderer Nachteil jedoch entgegen, daß die zum kontinuierlichen Betrieb des Lasers erforderliche, genügend geglättete Gleichspannung bzw. die dazu verwendeten Glättungskondensatoren der Erzeugung eines genügend steilen Zündimpulses entgegenwirken, weil sich die Glättungskondensatoren nach einer e-Funktion aufladen und die Spannungsanstiegsgeschwindigkeit mit steigender Aufladung geringer wird. Da die einzelnen Entladungsstrecken durch verschiedene Faktoren bedingt bei unterschiedlichen Spannungen zünden, erfolgt die Zündung infolge des relativ abgeflachten Verlaufs des Zündspannungsimpulses zeitlich versetzt, so daß bei geringen Anodenabständen sich gegenüberliegender Entladungsstrecken Zündschwierigkeiten auftreten können, derart, daß bei einer genügend großen zeitlichen Versetzung zwischen den beteiligten Anoden eine Potentialdifferenz in Höhe der Differenz zwischen Betriebs- und Brennspannung entsteht, die zu einer Gasentladung zwischen den Anoden führen und den Laser dadurch erheblich beschädigen kann. Diese Erscheinung ist mit den bisher bekannten Mitteln nur dann mit Sicherheit zu vermeiden, wenn die jeweiligen Anoden genügend weit voneinander entfernt angeordnet werden, was jedoch u. a. insbesondere im Hinblick auf die geforderte, möglichst kurze Baulänge derartiger Laser erhebliche Nachteile mit sich bringt.

Um die beschriebenen Zündschwierigkeiten zu umgehen, wurde auch schon vorgeschlagen, die einzelnen Gasbestandteile der jeweils verwendeten Gasmischungen nacheinander in die Entladungsstrecken einzuleiten, wobei zunächst mit dem Gasbestandteil begonnen werden soll, der sich am leichtesten zünden läßt, um danach die weiteren Gasbestandteile so zuzumischen, daß die Entladung erhalten bleibt, bis die Mischung bei normalem Arbeitsdruck das geforderte Mischungsverhältnis aufweist (DE-OS-3 113 591).

Diese Form der Zündung erfordert zwar keinen überhöhten Zündspannungsimpuls wie beim Zünden des bereits optimierten Gasgemisches, weil die Zündspannung für das am leichtesten zu zündende Gas teilweise sogar unter der normalen Brennspannung des anzustrebenden Gasgemisches liegen kann, sie ist jedoch erfahrungsgemäß außerordentlich zeitaufwendig. Besonders nachteilig bei dieser Lösung ist, daß der Laser nicht innerhalb kurzer Zeitintervalle ein- und ausgeschaltet werden kann.

Ziel der Erfindung ist es, ein Verfahren und eine zugehörige Schaltungsanordnung zum Zünden von Gaslasern und Gaslaserverstärkern mit mehreren gekoppelten Gasentladungsstrecken, die mit axialer Gleichstromentladung betrieben werden, zu entwickeln, mit dessen Einsatz die vorbeschriebenen Nachteile und damit eine Beschädigung des Lasers vermieden werden.

Der Erfindung liegt die Aufgabe zugrunde, ein Verfahren nebst zugehöriger Schaltungsanordnung zum Zünden von Gaslasern und Gaslaserverstärkern der genannten Art zu entwickeln, das bei geringem technischem Aufwand und geringer Störanfälligkeit eine hohe Zündsicherheit bei optimal verkürzter Baulänge des Lasers gewährleistet.

Gemäß der Erfindung wird diese Aufgabe unter Verwendung eines mittels Thyristoren gesteuerten Hochspannungstransformators mit nachgeschalteter Gleichrichtung und Glättung der abgegebenen Hochspannung gelöst, indem die nachfolgend aufgeführten Verfahrensschritte realisiert werden:

- Einschalten des Hochspannungsnetzgeräts mit Ansteuerung von primärseitig zum zugehörigen Hochspannungstransformator angeordneten Thyristoren mit einem einstellbaren Zündwinkel mit Hilfe der Steuerspannung U-St1;

- Aufladung des sekundärseitig zum Hochspannungstnansformator hinter einer geeigneten Zweiweg-Gleichrichtung zur Glättung der vom Gleichrichter abgegebenen pulsierenden Gleichspannung angeordneten Glättungskondensators auf eine Spannung, die von der Steuerspannung U-St1 abhängt und die maximal bis ca. 95 % unter der Zündspannung der einzelnen Teilentladungsstrecken des Lasers liegen kann:

- Verkleinerung des Zündwinkels der Thyristoren für einen kurzen Zeitraum auf Null mit Hilfe eines als Nadelimpuls ausgebildeten Steuerspannungsimpulses mit dem Spitzenwert U-St2 synchron mit dem Nulldurchgang der Sinusspannung des Netzes, wobei sich der Glättungskondensator mit einem in der Anfangsphase steil verlaufenden Anstieg weiter auflädt und sich ein kurzzeitiger, über der Zündspannung der einzelnen Teilentladungsstrecken des Lasers liegender Spannungsimpuls ergibt, der den Zündspannungsbereich aller beteiligten Teilentladungsstrecken infolge seiner steilen Anstiegsflanke innerhalb einer sehr kurzen Zeit überstreicht und damit den Laser in all seinen Teilentladungsstrecken mit hoher Sicherheit zündet;

- Einstellung des Zündwinkels der Thyristoren mit Hilfe einer einstellbaren Steuerspannung U-St3 auf den Wert, der dem jeweils geforderten Entladestrom für den Laser entspricht, vorausgesetzt, daß alle beteiligten Teilentladungsstrecken nach dem Zündimpuls gemäß U-St2 gezündet sind, während anderenfalls die Versorgungsspannung zum Schutz des Lasers sofort wieder abgeschaltet wird.

Dabei laufen diese Verfahrensschritte nach dem Einschalten innerhalb einer einstellbaren, relativ kurzen Zeit ab.

Die zugehörige Schaltungsanordnung zur Realisierung des Verfahrens gemäß der Erfindung wird im nachfolgenden Ausführungsbeispiel näher beschrieben. Dieses Ausführungsbeispiel stellt dabei eine bevorzugte Ausführungsform zur Realisierung des erfindungsgemäßen Verfahrens dar.

Die Erfindung soll nachstehend an einem Ausführungsbeispiel näher erläutert werden.

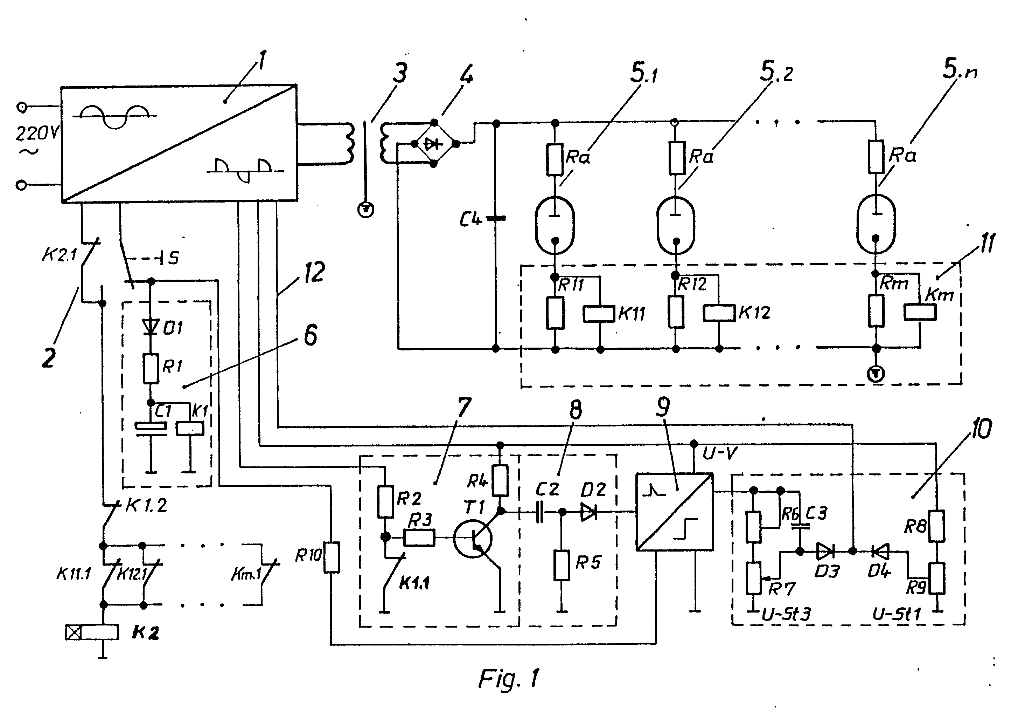

In der zugehörigen Zeichnung zeigt Fig. 1 die Schaltungsanordnung zur Realisierung des Verfahrens gemäß der Erfindung.

Die Darstellung gemäß Fig. 1 weist einen Thyristorsteller 1 mit einer Impulssperre 2 auf, der eingangsseitig mit einer sinusförmigen Wechselspannung betrieben wird und der ausgangsseitig einen Hochspannungstransformator 3 betreibt. Diesem Hochspannungstransformator 3 ist eine Zweiweg-Gleichrichtung 4 nachgeschaltet, deren Ausgangsspannung mittels Glättungskondensator C 4 im erforderlichen Umfang geglättet wird und die an den parallel geschalteten Entladungsstrekken 5.1, ..., 5.n anliegt.

Das Verfahren gemäß der Erfindung zur Zündung von Lasern der genannten Art soll anhand der dargestellten Schaltungsanordnung zunächst in der Anordnung der zugehörigen Baugruppen und nachfolgend in ihrem zeitlichen bzw. schaltungstechnischen Zusammenwirken näher beschrieben werden.

Die Schaltung besteht dazu aus folgenden Baugruppen:

- einem Zeitglied 6, das aus einer Diode D 1, einem Widerstand R 1, einem Kondensator C 1 in Reihenschaltung und einem parallel zum Kondensator C 1 liegenden Relais K 1 besteht und das über den Öffner des Einschalttasters S, d. h. bei gesperrter Impulssperre 2 des Thyristorstellers 1, mit Spannung versorgt wird;

- einem Synchronisationsglied 7, das vom Thyristorsteller 1 mit Synchronisationsimpulsen versorgt wird und bei welchem die Synchronisationsimpulse bei geschlossenem Schließer K 1.1 des Relais K 1 über einen Widerstand R 2 an Masse liegen, während sie bei offenem Schließer K 1.1 über einen Widerstand R 3 an die Basis des Transistors T 1 gelangen, der als Negator arbeitet;

- einem Differenzierglied 8 aus einem Kondensator C 2 und einem Widerstand R 5, mit dessen Hilfe die vom Transistor T 1 negierten Synchronisationsimpulse differenziert und über eine Diode D 2 weitergeleitet werden, welche nur positive Nadelimpulse passieren läßt;

- einem bistabilen Multivibrator 9, der über das Differenzierglied 8 angesteuert wird und der über den Öffner des Einschalttasters S und den Widerstand R 10 in den L-Zustand zurückgestellt wird:

- einem Schaltungsteil 10, das vom bistabilen Multivibrator 9 angesteuert wird und das zur Erzeugung der nachfolgend beschriebenen Steuerspannung dient:

. U-St1 mit einem Widerstand R 8, dem Einstellwiderstand R 9 und einer Diode D 4,

. U-St2 mit einem Kondensator C 3 und

. U-St3 mit den Einstellwiderständen R 6 und R 7, wobei der Kondensator C 3 parallel zum Widerstand R 6 und zum Abgriff von R 7 liegt und beide Spannungen U-St2 und U-St3 über die Diode D 3 an den Steuereingang 12 des Thyristorstellers 1 geführt werden, während die Steuerspannung U-St1 über die Diode D 4 am Steuereingang 12 anliegt sowie

- einem Schaltungsteil zur Zündkontrolle 11 mit in die Kathodenzweige aller Entladungsstrecken 5.1, ..., 5.n eingefügten Meßwiderständen R 11, ..., R m und zu diesen Meßwiderständen parallel liegenden Relais K 11, ..., K m, deren zugehörige Öffner K 11.1, ..., K m.1 parallel geschaltet sind und einerseits über den Öffner K 1.2 des Relais K 1 mit der Zündimpulssperre 2 verbunden sind und andererseits gegen Masse in Reihe mit einem Zeitrelais K 2 liegen, dessen Öffner K 2.1 in der Zündimpulssperre 2 angeordnet ist.

Die Schaltungsanordnung ist dabei so konzipiert, daß mit Betätigung des Einschalttasters S und der damit verbundenen Aufhebung der Zündimpulssperre 2 das Zeitglied 6 von der Versorgungsspannung getrennt wird. Dabei bleibt das Relais K 1 für einen von der Kapazität des Kondensators C 1 abhängigen Zeitraum noch angezogen. Damit werden einerseits die vom Thyristorsteller 1 abgenommenen Synchronisationsimpulse über den Schließer K 1.1 an Masse abgeleitet und andererseits wird die Versorgungsspannung U-V über den Widerstand R 8, den Abgriff des Einstellwiderstands R 9 sowie über die Diode D 4 an den Steuereingang 12 des Thyristorstellers 1 gelegt und die Thyristoren mit der über den Einstellwiderstand R 9 eingestellten Steuerspannung U-St1 bzw. dem sich daraus ergebenden Zündwinkel angesteuert und der Glättungskondensator C 4 mit der sich daraus ergebenden Ausgangsspannung aufgeladen. Nach entsprechender Entladung des Kondensators C 1 fällt das Relais K 1 verzögert ab, der Öffner K 1.2 schließt und schaltet damit die Zündkontrolle ein, während mit dem Öffnen des Schließers K 1.1 der nächste Synchronisationsimpuls genau mit dem Nulldurchgang der Netzsinusspannung den Transistor T 1 ansteuert, dessen Ausgangssignal vom nachgeschalteten Differenzierglied 8 differenziert und an den Eingang des bistabilen Multivibrators 9 gelegt wird. Dadurch kippt der bistabile Multivibrator 9 vom L- in den H-Zustand und gibt an seinem Ausgang eine höhere Ausgangsspannung ab, die dem Wert der Steuerspannung U-St2 entspricht. Diese sprunghafte Spannungsänderung wird zunächst voll über den Kondensator C 3 und die Diode D 3 (in Form eines Nadelimpulses) an den Steuereingang 12 des Thyristorstellers 1 weitergegeben, damit werden die Thyristoren voll aufgesteuert (Zündwinkel = 0). Dadurch wird am Ausgang ein steil verlaufender Zündspannungsimpuls abgegeben, der den Zündspannungsbereich aller beteiligten Entladungsstrecken 5.1, ..., 5.n innerhalb einer sehr kurzen Zeit überstreicht und damit den Laser mit hoher Sicherheit zündet. Mit der Aufladung des Kondensators C 3 sperrt dieser die vom Multivibrator abgegebene Gleichspannung (H-Potential), und die mit Hilfe der Einstellwiderstände R 6 und R 7 eingestellte Steuerspannung U-St3 wird über die Diode D 3 an den Steuereingang 12 des Thyristorstellers 1 gelegt. Damit werden die Thyristoren mit einem Zündwinkel angesteuert, der am Ausgang den geforderten Entladestrom über die Entladungsstrecken 5.1, ..., 5.n einstellt. Voraussetzung dazu ist, daß alle Entladungsstrecken 5.1, ..., 5.n gezündet sind, so daß über alle Meßwiderstände R 11, ..., R m eine entsprechende Spannung abfällt, die die jeweils zugehörigen Relais K 11, ..., K m ansteuert, so daß alle Öffner K 11.1, ..., K m.1 geöffnet werden. Ist jedoch eine der Entladungsstrecken 5.1, ..., 5.n nicht gezündet, so wird das zugehörige Relais K 11, ..., K m nicht angesteuert, und der wiederum dazugehörige Öffner K 11.1, ..., K m.1 bleibt geschlossen, so daß nach Ablauf einer einstellbaren Zeit das Relais K 2 anzieht, den zugehörigen Öffner K 2.1 öffnet, damit die Zündimpulssperre wieder sperrt und damit letztendlich die Hochspannung abschaltet.

**Patentansprüche**

1. Verfahren zum Zünden von Gaslasern und Gaslaserverstärkern mit mehreren gekoppelten Gasentladungsstrecken, die mit axialer Gleichstromentladung betrieben werden, vorzugsweise mit Resonatorenanordnungen mit mehrfacher Faltung und jeweils zwei gegenüberliegenden Entladungsstrecken, deren Kathoden auf Erdpotential liegen und deren Anoden einen geringen Abstand zueinander aufweisen, mit folgenden Verfahrensschritten:

- Einschalten eines Hochspannungsnetzgeräts mit Ansteuerung von primärseitig zu einem zugehörigen Hochspannungstransformator (3) angeordneten Thyristoren mit einem einstellbaren Zündwinkel mit Hilfe einer Steuerspannung U-St1;
- Aufladung eines sekundärseitig zum Hochspannungstransformator (3) hinter einer Zweiweg-Gleichrichtung zur Glättung der vom Gleichrichter (4) abgegebenen pulsierenden Gleichspannung angeordneten Glättungskondensators C 4 auf eine Spannung, die von der Steuerspannung U-St1 abhängt und die maximal bis ca. 95 % unter der Zündspannung der einzelnen Teilentladungsstrecken (5) des Lasers liegen kann;
- Verkleinerung des Zündwinkels der Thyristoren für einen kurzen Zeitraum auf Null mit Hilfe eines als Nadelimpuls ausgebildeten Steuerspannungsimpulses mit dem Spitzenwert U-St2 synchron mit dem Nulldurchgang der Sinusspannung des Netzes, wobei sich der Glättungskondensator 4 mit einem in der Anfangsphase steil verlaufenden Anstieg weiter auflädt und sich ein kurzzeitiger, über der Zündspannung der einzelnen Teilentladungsstrecken (5) des Lasers liegender Spannungsimpuls ergibt, der den Zündspannungsbereich aller beteiligten Teilentladungsstrecken (5) infolge seiner steilen Anstiegsflanke innerhalb einer sehr kurzen Zeit überstreicht und damit den Laser in all seinen Teilentladungsstrecken (5) mit hoher Sicherheit zündet;
- Einstellung des Zündwinkel der Thyristoren mit Hilfe einer einstellbaren Steuerspannung U-St3 auf den Wert, der dem jeweils geforderten Entladestrom für den Laser entspricht, vorausgesetzt, daß alle beteiligten Teilentladungsstrecken (5) nach dem Zündimpuls gemäß U-St2 gezündet sind, während anderenfalls die Versorgungsspannung zum Schutz des Lasers sofort wieder abgeschaltet wird, wobei die beschriebenen Verfahrensschritte nach dem Einschalten innerhalb einer einstellbaren, relativ kurzen Zeit ablaufen.

2. Schaltungsanordnung zur Durchführung des Verfahrens nach Anspruch 1, mit einem Thyristorsteller (1) mit Impulssperre (2), der eingangsseitig mit einer sinusförmigen Netzspannung betrieben wird und der ausgangsseitig einen Hochspannungstransformator (3) betreibt, einem Zweiweg-Gleichrichter (4) mit nachgeschaltetem Glättungskondensator C 4 und mehreren parallel geschalteten Entladungsstrecken (5), gekennzeichnet durch die nachfolgend beschriebenen Baugruppen:

- ein Zeitglied (6), das aus einer Diode D 1, einem Widerstand R 1, einem Kondensator C 1 in Reihenschaltung und einem parallel zum Kondensator C 1 liegenden Relais K 1 besteht und das über den Öffner des Einschalters (S) mit Spannung versorgt wird;

- ein Synchronisationsglied (7), das vom Thyristorsteller (1) mit Synchronisationsimpulsen versorgt wird, und bei welchem die Synchronisationsimpulse bei geschlossenem Schließer K 1.1 des Relais K 1 über einen Widerstand R 2 an Masse liegen, während sie bei offenem Schließer K 1.1 über einen Widerstand R 2 an die Basis eines Transistors (T 1) gelangen, der als Negator arbeitet;

- ein Differenzierglied (8) aus einem Kondensator C 2 und einem Widerstand R 5, mit dessen Hilfe die vom Transistor T 1 negierten Synchronisationsimpulse differenziert und über eine Diode D 2 weitergeleitet werden, welche nur positive Nadelimpulse passieren läßt:

- ein bistabiler Multivibrator (9), der über die Diode D 2 angesteuert wird und der über den Öffner des Einschalttasters S und einen Widerstand R 10 in den L-Zustand zurückgestellt wird;

- ein Schaltungsteil (10), das vom bistabilen Multivibrator (9) angesteuert wird und das zur Erzeugung der erforderlichen Steuerspannung dient:

. U-St1 mit einem Widerstand R 8, einem Einstellwiderstand R 93 und einer Diode D 4,
. U-St2 mit einem Kondensator C 3 und
. U-St3 mit den Einstellwiderständen R 6 und R 7, wobei der Kondensator C 3 parallel zum Widerstand R 6 und zum Abgriff von R 7 liegt und beide Spannungen U-St2 und U-St3 über eine Diode D 3 an den Steuereingang (12) des Thyristorstellers (1) geführt werden, während die Steuerspannung U-St1 über die Diode D 4 am Steuereingang (12) anliegt; sowie

- ein Schaltungsteil zur Zündkontrolle (11) mit in die Kathodenzweige aller Entladungsstrecken (5) eingefügten Meßwiderständen R 11, ..., R m und zu diesen Meßwiderständen parallel liegenden Relais K 11, ..., K m, deren zugehörige Öffner K 11.1, ..., K m.1 parallel geschaltet sind und einerseits über den Öffner K 1.2 des Relais K 1 mit der Zündimpulssperre (2) verbunden sind und andererseits gegen Masse in Reihe mit einem Zeitrelais K 2 liegen, dessen Öffner K 2.1 in der Zündimpulssperre (2) angeordnet ist.

wobei die Schaltungsanordnung zur Realisierung der Verfahrens gemäß Anspruch 1 so konzipiert ist, daß mit Betätigung des Einschalttasters S die Zündimpulssperre (2) für die Thyristoren des Thyristorstellers (1) aufgehoben wird, das Relais K 1 für einen von der Kapazität des Kondensators C 1 abhängigen Zeitraum noch angezogen bleibt und die Synchronisationsimpulse über den Schließer K 1.1 an Masse abgeleitet werden, wodurch die Versorgungsspannung U - V über den Widerstand R 8 und den Abgriff des Einstellwiderstands R 9 sowie über die Diode D 4 an den Steuereingang (12) des Thyristorstellers (1) gelegt und die Thyristoren mit der über den Einstellwiderstand R 9 eingestellten Steuerspannung U-St1 bzw. dem sich daraus ergebenden Zündwinkel angesteuert und der Glättungskondensator C 4 mit der sich daraus ergebenden Ausgangsspannung aufgeladen werden, während nach entsprechender Entladung des Kondensators C 1 das Relais K 1 abfällt, der Öffner K 1.2 schließt und damit die Zündkontrolle einschaltet, während der Schließer K 1.1 öffnet und der nächste Synchronisationsimpuls genau mit dem Nulldurchgang der Netzsinusspannung den Transistor T 1 ansteuert, womit der bistabile Multivibrator (9) über das zwischengeschaltete Differenzierglied (8) angesteuert wird und vom L- in den H-Zustand kippt, so daß sich ein Spannungssprung mit einer steilen Anstiegsflanke mit dem Spitzenwert U-St2 ergibt, der zunächst voll über den Kondensator C 3 und die Diode D 3 an den Steuereingang (12) des Thyristorstellers (1) weitergegeben wird und die Thyristoren voll aufsteuert (Zündwinkel = Null) und einen weit über der Zündspannung liegenden Zündspannungsimpuls hervorruft; mit der Aufladung des Kondensators C 3 sperrt dieser die anliegende Gleichspannung (H-Potential), und die mit Hilfe der Einstellwiderstände R 6 und R 7 eingestellte Steuerspannung U-St3 wird vom Abgriff des Einstellwiderstands R 7 und über die Diode D 3 an den Steuereingang (12) des Thyristorstellers (1) gelegt und der geforderte Entladungsstrom fließt über die vorliegenden Entladungsstrecken, vorausgesetzt, daß alle Entladungsstrecken gezündet sind und über alle Meßwiderstände R 11, ..., R m entsprechende Spannung abfällt, die die jeweils zugehörigen Relais K 11, ..., K m ansteuert, während für den Fall, daß mindestens eine der Entladungsstrecken (5) nicht gezündet ist, das zugehörige Relais K 11, ..., K m nicht anzieht und der wiederum dazu gehörige Öffner K 11.1, ..., K m.1 nicht öffnet und damit das Zeitrelais K 2 nicht rechtzeitig von der Spannung trennt, so daß nach Ablauf der eingestellten Zeit das Relais K 2 anzieht und über den Öffner K 2.1 die Zündimpulssperre (2) erneut sperrt und damit die Hochspannung wieder abschaltet.

## Claims

1. A method for igniting gas lasers and gas laser amplifiers comprising a plurality of coupled gas discharge paths which are operated with axial D.C.-discharge, preferably with resonators with multiple reflexion and two oppositely placed discharge paths in each case, the cathodes of which are connected to earth potential and the anodes of which are spaced at a small distance from each other, said method comprising the following operational stages:

- Activation of a high-voltage mains set with triggering of the thyristors arranged on the primary side relative to the associated high-voltage transformer (3) and having an adjustable firing angle, by means of a control voltage U-St1;

- charging the smoothing capacitor C 4, arranged on the secondary side following a suitable full-wave rectifier for smoothing the pulsating D.C. delivered by the rectifier (4), to a voltage which is a function of the control voltage U-St1 and which may be a maximum of approximately 95 % below the ignition voltage of the individual component discharge path of the laser;

- Reduction of the firing angle of the thyristors for a brief period to = Zero with the aid of a needle-shaped control voltage pulse having a peak value of U-St2 synchronous with the voltage-Zero of the sinusoidal system voltage, while the smoothing capacitor C 4 further charges itself with an steeply curved rise in the initial phase and a brief voltage pulse results, being of a value above that of the ignition voltage of the individual component discharge paths (5) of the laser which, owing to its steep rising flank, sweeps over the ignition range of all participant component discharge paths (5) within a very short time and thus ignites the laser in all its component discharge paths with a high degree of reliability;

- Adjustment of the firing angle of the thyristors by means of a variable control voltage U-St3 to that value which corresponds to the required discharge current of the laser in each case, with the precondition that all participant component discharge paths (5) have been ignited following the ignition pulse of U-St2, whereas otherwise the supply voltage is immediately switched off to protect the laser, the aforedescribed operational stages being completed within an adjustable, relatively short time following the initial activation.

2. A circuit arrangement for carrying out the method according to Claim 1, comprising a thyristor actuator (1) with pulse gating (2), which is driven input-side with a sinusoidal mains voltage and which drives with its output a high-voltage transformer (3), a full-wave rectifier (4) with following smoothing capacitor C 4 and several parallel-connected discharge paths (5), characterised in and by the sub-assemblies described in the following:

- a timing element (6) composed of a diode D 1, a resistor R 1, a capacitor C 1 in series connection and a relay K 1 lying parallel to the capacitor C 1 and which is supplied with voltage through the break contact of the starter switch S;

- a synchronising element (7), which is fed with synchronising pulses by the thyristor actuator (1) and in which the synchronising pulses, when the make contact K 1.1 of relay K 1 is closed, are connected to earth through a resistor R 2, whilst when the make contact K 1.1 is open they pass through a resistor R 2 to the base of a transistor T 1 which functions as an inverter;

- a differentiating element (8) composed of a capacitor C 2 and a resistor R 5, by means of which the synchronising pulses invertod by the transistor T 1 are differentiated and are further conveyed through a diode D 2 which allows only positive needle pulses to pass;

- a bistable multivibrator (9), which is activated through the diode D 2 and which is reset in the L-state through the make contact of the starter switch S and a resistor R 10;

- a circuit element (10), which is activated by the bistable multivibrator (9) and which serves to generate the required control voltage:
  . U-St1 with a resistor R 8, a variable resistor R 9 and a diode D 4,
  . U-St2 with a capacitor C 3, and
  . U-St3 with the variable resistors R 6 and R 7, in which the capacitor C 3 is connected parallel to the resistor R 6 and the tap of R 7 and the two voltages U-St2 and U-St3 are fed through a diode D 3 to the control input 12 of the thyristor actuator (1), while the control voltage U-St1 is applied through the diode D 4 to the control input 12; and further

- a circuit element for ignition control (11) with measuring resistors R 11, ..., R m fitted into the cathode lines of all discharge paths (5) and relays K 11, ..., K m in parallel to these measuring resistors, the associated break contacts K 11.1, ..., K m.1 of said relays being connected in parallel and are connected, firstly, through the break contact K 1.2 of the relay K 1 with the ignition pulse gating (2) and secondly are earthed in series with a time-lag relay K 2, the break contact K 2.1 of which is arranged in the ignition pulse gating (2),

in which the circuit arrangement for carrying out the method according to claim 1 is so conceived, that by actuation of the starter switch S the pulse gating (2) of the thyristors of the thyristor actuator (1) is opened, the relay K 1 remains closed for a time interval dependent on the capacity of the capacitor C 1 and the synchronising pulses are conveyed to earth through the make contact K 1.1, as a result of which the supply voltage U-V is applied through the resistor R 8 and the tap of the variable resistor R 9 as well as the diode D 4 to the control input (12) of the thyristor actuator (1) so that the thyristors are activated with the control voltage U-St1 and the associated firing angle set by means of the variable resistor R 9 and the smoothing capacitor C 4 is charged with the resulting output voltage, whilst after corresponding discharge of the capacitor C 1 the relay K 1 releases, the break contact K 1.2 closes and the make contact K 1.1 opens and the next synchronising pulse activates the transistor T 1 at exactly the voltage-Zero of the sinusoidal mains voltage, whereby the bistable multivibrator (9) is activated through the interconnected differentiating element (8) and flips from the L-state into the H-state, so that a voltage jump with steep rising flank and having the peak value U-St2 results, which is initially conveyed in its entirety through the capacitor C 3 and the diode D 3 to the control input (12) of the thyristor actuator (1) and fully activates the thyristors (firing angle = Zero) and brings about an ignition voltage pulse which is much higher than the ignition voltage; on the capacitor C 3 being charged, the latter blocks the applying D.C.-voltage (H-potential), and the control voltage U-St3 set by means of the variable resistors R 6 and R 7 is applied from the tap of the variable resistor R 7 through the diode D 3 to the control input (12) of the thyristor actuator (1) and the required discharge current flows through the available discharge paths, on condition that all discharge paths have been ignited and that through all the neasuring resistors R 11, ..., R m a corresponding voltage flows which activates the associated relay K 11, ..., K m in each case, whereas in the case when at least one of the discharge paths (5) fails to ignite, the associated relay K 11, ..., K m does not respond and in turn the associated break contact K 11.1, ..., K m.1 does not open and thus does not cut off the time-lag relay K 2 from the voltage at the correct time, so that after expiry of the preset time the relay K 2 responds and through the break contact K 2.1 closes again the ignition pulse gating (2), thereby switching off the high voltage.

**Revendications**

1. Procédé d'amorçage d'un laser à gaz et d'un amplificateur de laser à gaz à plusieurs espaces de décharge électrique couplés fonctionnant à décharge axial par courant continu, avec, de préférence, des arrangements de résonateurs à pliage multiple chacun à deux espaces de décharge disposés l'un en face de l'autre, dont les cathodes sont mises au potentiel de la terre et dont les anodes présentent l'une à l'autre une faible distance, aux phases suivantes:

- mise sous tension d'un bloc d'alimentation H.T. et commande de thyristors disposés côté primaire d'un transformateur H.T. (3) afférent, dont l'angle d'amorçage est réglable à l'aide d'une tension de commande U-St1;
- charge d'un condensateur de lissage C 4 disposé côté secondaire du transformateur H.T. (3), en aval d'un redresseur à deux alternances, pour le lissage de la tension continue pulsée débitée par le redresseur (4) à une tension qui est fonction de la tension de commande U-St1 et qui peut être jusqu'à environ 95 % au maximum inférieure à la tension d'amorçage des différents espaces de décharge partiels (5) du laser;
- réduction temporaire de l'angle d'amorçage des thyristors à une valeur nulle, par l'intermédiaire d'une impulsion de tension de commande en forme d'impulsion en pointe à la valeur de pointe U-St2 au moment du passage par zéro de la tension sinusoïdale du secteur, le condensateur de lissage C 4 continuant à se charger à croissance raide dans la phase initiale, de manière à obtenir une impulsion de tension temporairement supérieure à la tension d'amorçage des différents espaces de décharge partiels (5) du laser, qui du fait de la raideur de son flanc de montée balaie la plage de tension d'amorçage de tous les espaces de décharge partiels (5) concernés pendant un temps très court, en amorçant tous les espaces de décharge partiels (5) du laser avec beaucoup de certitude;
- réglage de l'angle d'amorçage des thyristors, par l'intermédiaire d'une tension de commande U-St3 réglable, à la valeur correspondant au courant de décharge requis du laser, à condition de l'amorçage de tous les espaces de décharge partiels (5) par l'impulsion d'amorçage à U-St2 et, dans le cas contraire, coupure immédiate de la tension d'alimentation, afin de protéger le laser,

les phases de procédé décrites se déroulant après la mise sous tension dans un temps relativement court réglable.

2. Circuit pour la réalisation du procédé selon la revendication 1, comprenant un organe de réglage à thyristors (1) avec blocage d'impulsions (2), alimenté côté entrée en tension secteur sinusoïdale et alimentant côté sortie un transformateur H.T. (3), un redresseur à deux alternances (4) avec en aval un condensateur de lissage C 4 et plusieurs espaces de décharge parallèles (5), caractérisé par les éléments ci-après décrits:

- un temporisateur (6) constitué d'une diode D 1, d'une résistance R 1, d'un condensateur C 1 montés en série et d'un relais K 1 monté en parallèle au condensateur C 1, et qui est alimenté en tension par le contact de repos de l'interrupteur S;
- un élément de synchronisation (7) alimenté en impulsions de synchronisation par l'organe de réglage à thyristors (1) dont les impulsions de synchronisation sont mises à la masse par une résistance R 2 en cas de contact de travail K 1.1 du relais K 1 fermé, tandis qu'elles alimentent par la résistance R 2 la base d'un transistor T 1 fonctionnant en inverseur, lorsque le contact de travail K 1.1 est ouvert;

- un élément différenciateur (8) constitué d'un condensateur C 2 et d'une résistance R 5, permettant de différencier les impulsions de synchronisation inversées par le transistor T 1 et de les transmettre à une diode D 2 ne faisant passer que des impulsions en pointe positives;

- un multivibrateur bistable (9) qui est commandé par la diode D 2 et qui est remis en état L par le contact de repos de l'interrupteur S et une résistance R 10;

- un élément (10) qui est commandé par le multivibrateur bistable (9) et qui sert à produire les tensions de commande requises:

. U-St1 par une résistance R 8, un rhéostat de réglage R 9 et une diode D 4,

. U-St2 par un condensateur C 3 et

. U-St3 par les rhéostats de réglage R 6 et R 7, le condensateur C 3 étant monté en parallèle au rhéostat R 6 et à la prise de R 7 et les deux tensions U-St2 et U-St3 alimentant l'entrée de commande (12) de l'organe de réglage à thyristors (1) par une diode D 3, tandis que la tension de commande U-St1 est appliquée à l'entrée de commande (12) par la diode D 4; ainsi que

- un élément de contrôle d'amorçage (11) comprenant des résistances de mesure R 11, ..., R m intégrées dans les branches des cathodes de tous les espaces de décharge (5) et des relais K 11, ..., K m montés en parallèle aux dites résistances de mesure, dont les contacts de repos afférents K 11.1, ..., K m.1 sont montés en parallèle et qui sont d'une part reliés par le contact de repos K 1.2 du relais K 1 à l'élément de blocage des impulsions d'amorçage (2) et d'autre part mis à la masse en série avec un relais temporisé K 2 dont le contact de repos K 2.1 est monté dans l'élément de blocage des impulsions d'amorçage (2),

le circuit pour la réalisation du procédé selon la revendication 1 étant conçu de façon que l'appui de l'interrupteur S annule le blocage des impulsions d'amorçage (2) des thyristors de l'organe de réglage à thyristors (1), que le relais K 1 reste encore attiré pendant un temps qui est fonction de la capacité du condensateur C 1 et que les impulsions de synchronisation sont transmises à la masse par le contact de travail K 1.1, ce qui a pour effet l'application de la tension d'alimentation U-V, par la résistance R 8 et la prise du rhéostat de réglage R 9 ainsi que par la diode D 4, à l'entrée de commande (12) de l'organe de réglage à thyristors (1) et la commande des thyristors par la tension de commande U-St1 réglée par l'intermédiaire du rhéostat de réglage R 9 ou l'angle d'amorçage résultant, et la charge du condensateur de lissage C 4 par la tension de sortie résultante, tandis que, après la décharge correspondante du condensateur C 1, le relais K 1 retombe, le contact de repos K 1.2 ferme, en mettant en circuit l'élément de contrôle d'amorçage, tandis que le contact de travail K 1.1 ouvre et l'impulsion de synchronisation suivante attaque le transistor T 1 juste au passage par zéro de la tension sinusoïdale du secteur, ce qui a pour effet l'attaque du multivibrateur bistable (9) par l'élément différenciateur (8) intercalé basculant du niveau L au niveau H, tout en produisant un saut de tension dont le flanc de montée raide a la valeur de pointe U-St2 qui est d'abord complètement transmise, par le condensateur C 3 et la diode D 3, à l'entrée de commande (12) de l'organe de réglage à thyristors (1), en rendant les thyristors entièrement conducteurs (angle d'amorçage = nul) et en produisant une impulsion de tension d'amorçage largement supérieure à la tension d'amorçage; après être chargé, le condensateur C 3 bloque la tension continue appliquée (potentiel H) et la tension de commande U-St3 réglée par l'intermédiaire des rhéostats de réglage R 6 et R 7 se trouve appliquée depuis la prise du rhéostat de réglage R 7 et par la diode D 3 à l'entrée de commande (12) de l'organe de réglage à thyristors (1) et le courant de décharge requis parcourt par les espaces de décharge existants, pour autant que tous les espaces de décharge soient amorcés et que toutes les résistances de mesure R 11, ..., R m produisent la chute de tension correspondante commandant les relais afférents K 11, ..., K m, tandis que dans le cas où au moins un des espaces de décharge (5) n'est pas amorcé, le relais afférent K 11, ..., K m n'attire pas et le contact de repos K 11.1, ..., K m.1 afférent n'ouvre pas et ne coupe donc pas le relais temporisé K 2 à temps de la tension, de sorte qu'au bout du temps réglé le relais K 2 attire, en bloquant de nouveau, par le contact de repos K 2.1, l'élément de blocage des impulsions d'amorçage (2) et en recoupant ainsi la haute tension.

Fig. 1